# EUROPEAN PATENT APPLICATION

(11) **EP 4 349 506 A1**
(43) Date of publication of application: **10.04.2024**
(21) Application number: 21944014.6
(22) Date of filing: 31.05.2021
(51) Int. Cl.: B22C 1/22

(54) **METHOD FOR PRODUCING ADHESIVE RESIN FOR MOLDING**

(71) Applicant: Kao Corporation, Chuo-ku Tokyo 103-8210 (JP)
(72) Inventor: MATSUO, Toshiki, Toyohashi-shi, Aichi 441-8074 (JP); TANAKA, Hiroki, Toyohashi-shi, Aichi 441-8074 (JP); YAMAGUCHI, Daisuke, Toyohashi-shi, Aichi 441-8074 (JP)
(74) Representative: Hoffmann Eitle
(86) International application number: PCT/JP2021/020646
(87) International publication number: WO 2022/254503

(57) **Abstract**

The present invention is a method for producing a binder resin for making foundry molds which contains bishydroxymethylfuran, and a furan resin, the method including a step A in which furfuryl alcohol and formaldehyde are reacted in a presence of at least one "catalyst a" selected from among phosphoric acid and boric acid and at least one "neutralized salt a" selected from among a mono-neutralized salt of phosphoric acid and a mono-neutralized salt of boric acid, wherein in the step A, an amount of the "catalyst a" used is 0.0002 mol or more and 0.01 mol or less per mole of furfuryl alcohol, and an amount of the "neutralized salt a" used is 0.003 mol or more in terms of acid per mole of furfuryl alcohol. According to the present invention, it is possible to provide a method for producing a binder resin for making foundry molds which achieves a high reaction rate and has a low content of furfuryl alcohol in monomer form, a high bishydroxymethylfuran content, and low viscosity.

## Description

### TECHNICAL FIELD

The present invention relates to a method for producing a binder resin for making foundry molds.

### BACKGROUND ART

An acid-hardening mold is generally produced by adding a binder composition for making foundry molds containing an acid-hardening resin and a hardening agent composition containing sulfonic acid, sulfuric acid, phosphoric acid, or the like to refractory particles such as quartz sand, kneading them, filling the thus obtained mixed sand composition into an original pattern such as a wooden pattern, and hardening the acid-hardening resin. Examples of the acid-hardening resin to be used include a furan resin and a phenolic resin. Examples of the furan resin to be used include a furfuryl alcohol-ureaformaldehyde resin, a furfuryl alcohol-formaldehyde resin, a furfuryl alcohol-phenol-formaldehyde resin, and other known denatured furan resins. Such a mold production method is widely used to produce castings such as machine parts, construction machine parts, and automobile parts because molding can be performed with a high degree of freedom and high-quality castings can be produced due to excellent thermal properties of molds.

An important requirement for producing a mold is an improvement in the working environment where the mold is produced (when the resin is being hardened). In particular, a reduction of monomeric furfuryl alcohol in furan resin is desired to reduce the amount of furfuryl alcohol that volatilizes in the production of the mold.

For example, JP-A-2014-501175 discloses that release of furfuryl alcohol and formaldehyde at the time of kneading or making foundry molds can be reduced by using a binder composition containing monomeric furfuryl alcohol at a small content.

In addition, JP-A-56-61420 discloses a method for producing a phenol-furfuryl alcohol-formaldehyde resin, for making foundry molds, in which a furfuryl alcohol skeleton is introduced into a resin structure at a high ratio by performing a reaction sufficiently and the content of monomeric furfuryl alcohol is small.

Furthermore, JP-A-2013-151019 discloses that using a binder composition containing 5-hydroxymethylfurfural or 2,5-bishydroxymethylfuran as a substitute for furfuryl alcohol shortens the strip time in a certain bench life to improve the mold productivity and improve the hardening speed and the mold strength.

### SUMMARY OF THE INVENTION

The present invention is a method for producing a binder resin for making foundry molds which contains furfuryl alcohol, bishydroxymethylfuran, and a furan resin, the method including
a step A in which furfuryl alcohol and formaldehyde are reacted in a presence of at least one "catalyst a" selected from among phosphoric acid and boric acid and at least one "neutralized salt a" selected from among a mono-neutralized salt of phosphoric acid and a mono-neutralized salt of boric acid, wherein
in the step A, an amount of the "catalyst a" used is 0.0002 mol or more and 0.01 mol or less per mole of furfuryl alcohol, and an amount of the "neutralized salt a" used is 0.003 mol or more in terms of acid per mole of furfuryl alcohol.

Also, the present invention is a binder composition for making foundry molds, the binder composition including furfuryl alcohol (component A), bishydroxymethylfuran (component B), a furan resin (component C), and water (component D) and satisfying the following conditions (1) to (4):
Condition (1): a content of the component A in the binder composition for making foundry molds is 30 mass% or less;
Condition (2): a content of the component B in the binder composition for making foundry molds is 7 mass% or more;
Condition (3): a content of the component D in the binder composition for making foundry molds is 25 mass% or less; and
Condition (4): a content of at least one "catalyst a" selected from among phosphoric acid and boric acid is 0.01 g or more and 0.50 g or less and a content of at least one "neutralized salt a" selected from among a mono-neutralized salt of phosphoric acid and a mono-neutralized salt of boric acid in terms of acid is 0.13 g or more per 100 g of the binder composition for making foundry molds.

Also, the present invention is a composition for making foundry molds, the composition including: the binder composition for making foundry molds; and a curing agent composition containing a curing agent for hardening the binder composition for making foundry molds.

Also, the present invention is a composition for foundry molds, the composition including: refractory particles; the binder composition for making foundry molds; and a curing agent composition containing a curing agent for hardening the binder composition for making foundry molds.

Also, the present invention is a method for producing a foundry mold, the method including: a mixing step in which refractory particles, the binder composition for making foundry molds, and a curing agent composition containing a curing agent for hardening the binder composition for making foundry molds are mixed to obtain a composition for foundry molds; and a hardening step in which the composition for foundry molds is filled into a pattern and hardened.

### DETAILED DESCRIPTION OF THE INVENTION

The binder composition having a low content of furfuryl alcohol in monomer form, which has been heretofore proposed, has room for improvement in terms of poor mold strength. Bishydroxymethylfuran may separately be added to increase mold strength, which is however impractical in economic terms.

The present invention provides a method for producing a binder resin for making foundry molds which achieves a high reaction rate and has a low content of furfuryl alcohol in monomer form, a high bishydroxymethylfuran content, and low viscosity. Further, the present invention provides a binder composition for making foundry molds which has a low content of furfuryl alcohol in monomer form, a high bishydroxymethylfuran content, and low viscosity and which can increase mold strength, a composition for making foundry molds, a composition for foundry molds, and a method for producing a foundry mold.

The present invention is a method for producing a binder resin for making foundry molds which contains furfuryl alcohol, bishydroxymethylfuran, and a furan resin, the method including
a step A in which furfuryl alcohol and formaldehyde are reacted in a presence of at least one "catalyst a" selected from among phosphoric acid and boric acid and at least one "neutralized salt a" selected from among a mono-neutralized salt of phosphoric acid and a mono-neutralized salt of boric acid, wherein
in the step A, an amount of the "catalyst a" used is 0.0002 mol or more and 0.01 mol or less per mole of furfuryl alcohol, and an amount of the "neutralized salt a" used is 0.003 mol or more in terms of acid per mole of furfuryl alcohol.

Also, the present invention is a binder composition for making foundry molds, the binder composition including furfuryl alcohol (component A), bishydroxymethylfuran (component B), a furan resin (component C), and water (component D) and satisfying the following conditions (1) to (4):
Condition (1): a content of the component A in the binder composition for making foundry molds is 30 mass% or less;
Condition (2): a content of the component B in the binder composition for making foundry molds is 7 mass% or more;
Condition (3): a content of the component D in the binder composition for making foundry molds is 25 mass% or less; and
Condition (4): a content of at least one "catalyst a" selected from among phosphoric acid and boric acid is 0.01 g or more and 0.50 g or less and a content of at least one "neutralized salt a" selected from among a mono-neutralized salt of phosphoric acid and a mono-neutralized salt of boric acid in terms of acid is 0.13 g or more per 100 g of the binder composition for making foundry molds.

Also, the present invention is a composition for making foundry molds, the composition including: the binder composition for making foundry molds; and a curing agent composition containing a curing agent for hardening the binder composition for making foundry molds.

Also, the present invention is a composition for foundry molds, the composition including: refractory particles; the binder composition for making foundry molds; and a curing agent composition containing a curing agent for hardening the binder composition for making foundry molds.

Also, the present invention is a method for producing a foundry mold, the method including: a mixing step in which refractory particles, the binder composition for making foundry molds, and a curing agent composition containing a curing agent for hardening the binder composition for making foundry molds are mixed to obtain a composition for foundry molds; and a hardening step in which the composition for foundry molds is filled into a pattern and hardened.

According to the present invention, it is possible to provide a method for producing a binder resin for making foundry molds which achieves a high reaction rate and has a low content of furfuryl alcohol in monomer form, a high bishydroxymethylfuran content, and low viscosity. Further, according to the present invention, it is possible to provide a binder composition for making foundry molds which has a low content of furfuryl alcohol in monomer form, a high bishydroxymethylfuran content, and low viscosity and which can increase mold strength, a composition for making foundry molds, a composition for foundry molds, and a method for producing a foundry mold.

Hereinbelow, an embodiment of the present invention will be described.

### <Method for producing a binder resin for making foundry molds>

A method for producing a binder resin for making foundry molds (hereinafter also simply referred to as a binder resin) according to the present embodiment is a method for producing a binder resin for making foundry molds which contains furfuryl alcohol, bishydroxymethylfuran (hereinafter also referred to as BHMF), and a furan resin, the method including
a step A in which furfuryl alcohol and formaldehyde are reacted in a presence of at least one "catalyst a" selected from among phosphoric acid and boric acid and at least one "neutralized salt a" selected from among a mono-neutralized salt of phosphoric acid and a mono-neutralized salt of boric acid, wherein
in the step A, an amount of the "catalyst a" used is 0.0002 mol or more and 0.01 mol or less per mole of furfuryl alcohol, and an amount of the "neutralized salt a" used is 0.003 mol or more in terms of acid per mole of furfuryl alcohol.

According to the method for producing a binder resin, it is possible to produce a binder resin for making foundry molds which achieves a high reaction rate and has a low content of furfuryl alcohol in monomer form, a high BHMF content, and low viscosity. The reason why the method for producing a binder composition exhibits such an effect is not clear, but is presumed as follows.

If the amount of the "catalyst a" as a catalyst for producing the binder resin is too small, the reaction of furfuryl alcohol (component A) is extremely slow so that the amount of BHMF (component B) generated is small. On the other hand, if the amount of the "catalyst a" is too large, the reaction of furfuryl alcohol is fast, but BHMF is considered to be likely to disappear due to condensation. It is considered that when the "neutralized salt a" is contained in a certain amount or more, equilibrium in the dissociation of phosphoric acid and boric acid as the "catalyst a" is adjusted so that the dissociation is suppressed, which makes it possible to achieve an appropriately fast reaction of furfuryl alcohol, easily generate BHMF, appropriately suppress the reaction of BHMF, and obtain a binder resin having a low furfuryl alcohol content and a high BHMF content. BHMF is more reactive than furfuryl alcohol and a furan resin (component C). Therefore, the binder composition according to the present embodiment is considered to have low viscosity and increase mold strength of the binder due to its high BHMF (component B) content in spite of its low furfuryl alcohol content.

### [Step A]

The step A is a step in which furfuryl alcohol and formaldehyde are reacted in the presence of at least one "catalyst a" selected from among phosphoric acid and boric acid and at least one "neutralized salt a" selected from among a mono-neutralized salt of phosphoric acid and a mono-neutralized salt of boric acid.

### [Catalyst a]

The "catalyst a" is at least one selected from among phosphoric acid and boric acid. The "catalyst a" preferably contains phosphoric acid and is more preferably phosphoric acid from the viewpoint of increasing the reaction rate.

From the viewpoint of increasing the reaction rate between furfuryl alcohol and formaldehyde, the amount of the "catalyst a" used in the step A is 0.0002 mol or more, preferably 0.0004 mol or more, more preferably 0.0006 mol or more, even more preferably 0.0008 mol or more, still even more preferably 0.0009 mol or more per mole of furfuryl alcohol. From the viewpoint of increasing the amount of BHMF contained in the binder resin, the amount of the "catalyst a" used in the step A is 0.01 mol or less, preferably 0.008 mol or less, more preferably 0.005 mol or less, even more preferably 0.003 mol or less, still even more preferably 0.002 mol or less per mole of furfuryl alcohol.

### [Neutralized salt a]

The "neutralized salt a" is at least one selected from among a mono-neutralized salt of phosphoric acid and a mono-neutralized salt of boric acid. From the viewpoint of increasing the reaction rate, the "neutralized salt a" preferably contains a mono-neutralized salt of phosphoric acid and is more preferably a mono-neutralized salt of phosphoric acid.

From the viewpoints of increasing the amount of BHMF contained in the binder resin and of increasing the reaction rate between furfuryl alcohol and formaldehyde, the amount of the "neutralized salt a" used in the step A is 0.003 mol or more, preferably 0.004 mol or more, more preferably 0.005 mol or more, even more preferably 0.006 mol or more, still even more preferably 0.009 mol or more, still even more preferably 0.010 mol or more, still even more preferably 0.014 mol or more in terms of acid per mole of furfuryl alcohol. From the viewpoint of increasing the amount of BHMF contained in the binder resin, the amount of the "neutralized salt a" used in the step A is preferably 0.15 mol or less, more preferably 0.12 mol or less, even more preferably 0.10 mol or less, still even more preferably 0.04 mol or less, still even more preferably 0.03 mol or less in terms of acid per mole of furfuryl alcohol.

The "neutralized salt a" may be at least one selected from among an alkali metal salt and an amine salt. The alkali metal salt may be, for example, at least one selected from among a sodium salt and a potassium salt. The amine salt may be, for example, an amine salt having an alkyl group. The alkyl group may have a hydroxy group. From the viewpoints of increasing the reaction rate between furfuryl alcohol and formaldehyde and of increasing the amount of BHMF contained in the binder resin, the alkyl group preferably has a hydroxy group.

When the amine salt has an alkyl group, the number of carbon atoms of the alkyl group is preferably 2 or more, more preferably 3 from the viewpoint of increasing the amount of BHMF contained in the binder resin. When the amine salt has an alkyl group, the number of carbon atoms of the alkyl group is preferably 10 or less, more preferably 8 or less, even more preferably 6 or less, still even more preferably 4 or less, still even more preferably 3 from the viewpoints of solubility in furfuryl alcohol and of increasing the reaction rate between furfuryl alcohol and formaldehyde.

The amine salt is preferably a tertiary amine from the viewpoint of low reactivity with formaldehyde. Examples of the tertiary amine include triethanolamine, tripropylamine, triisopropanolamine, tributylamine, hexylamine, and trioctylamine.

From the viewpoints of increasing the reaction rate between furfuryl alcohol and formaldehyde and of increasing the amount of BHMF contained in the binder resin, the "neutralized salt a" is preferably an amine salt, more preferably an amine salt having an alkyl group containing 2 or more and 10 or less carbon atoms, even more preferably a tertiary amine salt having an alkyl group containing 2 or more and 10 or less carbon atoms, still even more preferably a tertiary amine salt having an alkyl group having a hydroxy group and containing 2 or more and 10 or less carbon atoms. Further, from the same viewpoints, the "neutralized salt a" is preferably at least one selected from among triethanolamine, tripropylamine, triisopropanolamine, tributylamine, trihexylamine, and trioctylamine, more preferably at least one selected from among triethanolamine and triisopropanolamine.

The amounts of the "catalyst a" and the "neutralized salt a" per mole of furfuryl alcohol can be adjusted by the amount of at least one selected from among phosphoric acid and boric acid and the amount of at least one selected from among an alkali metal and an amine.

The degree of neutralization of the "catalyst a" ["neutralized salt a" /("catalyst a" + "neutralized salt a")] is preferably 250 or more, more preferably 30% or more, even more preferably 50% or more, still even more preferably 85% or more, still even more preferably 90% or more, still even more preferably 93% or more from the viewpoints of increasing the amount of BHMF contained in the binder resin and of increasing the reaction rate between furfuryl alcohol and formaldehyde, and is preferably less than 100%, more preferably 97% or less, even more preferably 96% or less from the same viewpoints.

### [Furan resin]

The furan resin is obtained by polymerizing a monomer composition containing furfuryl alcohol, and is not limited as long as it can be used for a binder for making foundry molds. The furan resin may be only a resin containing a nitrogen atom, only a resin not containing a nitrogen atom, or a mixture of a resin containing a nitrogen atom and a resin not containing a nitrogen atom. The furan resin containing a nitrogen atom may be, for example, at least one selected from the group consisting of a condensation product of furfuryl alcohol, urea, and an aldehyde (urea-modified furan resin), a condensation product of furfuryl alcohol, melamine, and an aldehyde, and a condensation product of furfuryl alcohol, ethylene urea, and an aldehyde. The furan resin not containing a nitrogen atom may be, for example, at least one selected from the group consisting of a condensation product of furfuryl alcohol and an aldehyde and a condensation product of furfuryl alcohol, a phenol, and an aldehyde. It should be noted that furfuryl alcohol is not regarded as a furan resin herein.

From the viewpoints of achieving a low content of furfuryl alcohol in monomer form, a high BHMF content, and low viscosity and of increasing mold strength, the furan resin preferably contains at least one selected from the group consisting of a condensation product of furfuryl alcohol, urea, and an aldehyde (urea-modified furan resin), a condensation product of furfuryl alcohol, melamine, and an aldehyde, a condensation product of furfuryl alcohol, ethylene urea, and an aldehyde, a condensation product of furfuryl alcohol and an aldehyde, and a condensation product of furfuryl alcohol, a phenol, and an aldehyde and at least one selected from the group consisting of co-condensation products of two or more selected from the above group, and more preferably contains at least one selected from the group consisting of a urea-modified furan resin and a condensation product of furfuryl alcohol and an aldehyde and at least one selected from the group consisting of co-condensation products of two or more selected from the above group.

The total content of at least one selected from the group consisting of the urea-modified furan resin and a condensation product of furfuryl alcohol and an aldehyde and at least one selected from the group consisting of co-condensation products of two or more selected from the above group in the furan resin is preferably 90 mass% or more, more preferably 95 mass% or more, even more preferably 98 mass% or more, even more preferably substantially 100 mass%, still even more preferably 100 mass% from the viewpoints of achieving a low content of furfuryl alcohol in monomer form, a high BHMF content, and low viscosity and of increasing mold strength. It should be noted that "substantially" herein means that another component may be contained in an amount such that the component can be regarded as an impurity.

Examples of the aldehydes include formaldehyde, acetaldehyde, glyoxal, furfural, terephthalaldehyde, and hydroxymethylfurfural, and at least one of them can appropriately be used. From the viewpoint of improving mold strength, formaldehyde is preferably used. From the viewpoint of reducing the amount of formaldehyde generated during molding, furfural, terephthalaldehyde, or hydroxymethylfurfural is preferably used.

The aldehyde contains formaldehyde from the viewpoints of obtaining a binder resin for making foundry molds which achieves a high reaction rate and has a low content of furfuryl alcohol in monomer form, a high BHMF content, and low viscosity and of obtaining a binder composition for making foundry molds which has a low content of furfuryl alcohol in monomer form, a high BHMF content, and low viscosity and can increase mold strength. From the same viewpoints, the amount of formaldehyde contained in the aldehyde is preferably 80 mass% or more, more preferably 90 mass% or more, even more preferably 98 mass% or more, still even more preferably substantially 100 mass%. The phrase "substantially 100 mass%" herein means that a component unintentionally contained may be contained. The component unintentionally contained may be, for example, an inevitable impurity.

Examples of the phenols include phenol, cresol, resorcin, bisphenol A, bisphenol C, bisphenol E, and bisphenol F, and at least one of them can be used.

In the step A, a furan resin can be obtained by reacting furfuryl alcohol and an aldehyde and, if necessary, a phenol, a urea-based compound such as urea and ethylene urea, and melamine with the use of predetermined amounts of the "catalyst a" and the "neutralized salt a". Reaction conditions such as reaction temperature can appropriately be adjusted according to a desired furan resin. As examples, the reaction conditions will be described with reference to a case where the desired furan resin is "at least one (hereinafter also referred to as nitrogen atom-free furan resin) selected from the group consisting of a condensation product of furfuryl alcohol and an aldehyde and a condensation product of furfuryl alcohol, a phenol, and an aldehyde" and a case where the desired furan resin is "at least one (hereinafter also referred to as nitrogen atom-containing furan resin) selected from the group consisting of a urea-modified furan resin, a condensation product of furfuryl alcohol, melamine, and an aldehyde, and a condensation product of furfuryl alcohol, ethylene urea, and an aldehyde".

### [Examples of reaction conditions of nitrogen atom-free furan resin]

### (Reaction temperature)

The reaction temperature in the step A when the nitrogen atom-free furan resin is to be obtained is preferably 80°C or more, more preferably 90°C or more from the viewpoint of improving productivity. The reaction temperature in the step A when the nitrogen atom-free furan resin is to be obtained is preferably 125°C or less, more preferably 115°C or less, even more preferably 110°C or less from the viewpoint of suppressing condensation between furfuryl alcohol molecules to increase the BHMF content.

### (pH of reaction liquid before start of reaction)

From the viewpoint of increasing the amount of BHMF contained in the binder resin, the pH of a reaction liquid before start of reaction in the step A is preferably 2 or more, more preferably 2.5 or more, even more preferably 3.3 or more, still even more preferably 3.7 or more. From the viewpoint of increasing the reaction rate between furfuryl alcohol and formaldehyde, the pH of a reaction liquid before start of reaction in the step A is preferably 5.5 or less, more preferably 5.0 or less, even more preferably 4.5 or less, still even more preferably 4.1 or less. The pH of a reaction liquid before start of reaction in the step A can be measured with the method described in Examples.

### (Reaction time)

The reaction time in the step A when the nitrogen atom-free furan resin is to be obtained is preferably 200 minutes or more, more preferably 250 minutes or more, even more preferably 280 minutes or more from the viewpoints of reducing the furfuryl alcohol content and of suppressing condensation between furfuryl alcohol molecules to increase the BHMF content. The reaction time in the step A when the nitrogen atom-free furan resin is to be obtained is preferably 750 minutes or less, more preferably 620 minutes or less, even more preferably 600 minutes or less, still even more preferably 570 minutes or less, still even more preferably 520 minutes or less, still even more preferably 490 minutes or less from the viewpoint of improving productivity.

### (Reaction pressure)

The reaction pressure in the step A when the nitrogen atom-free furan resin is to be obtained may be reduced pressure or normal pressure. From the viewpoint of shortening the reaction time, reduced pressure is preferred.

### [Examples of reaction conditions of nitrogen atom-containing furan resin]

When obtaining nitrogen atom-containing furan resin, from the viewpoint of reducing the content of furfuryl alcohol and free aldehyde in the resulting resin, it is preferable to first react furfuryl alcohol with an aldehyde and then react a reaction intermediate with the urea-based compound and/or melamine and the like. In other words, when obtaining nitrogen atom-containing furan resin, from the viewpoint of reducing the content of furfuryl alcohol and free aldehyde in the resulting resin, the step A preferably includes a step A1 in which furfuryl alcohol and an aldehyde are reacted, and a step A2 in which the reaction intermediate obtained in process A1 and the urea-based compound and/or melamine and the like are reacted.

### (Step A1)

### (Reaction temperature)

The reaction temperature in the step A1 when the nitrogen atom-containing furan resin is to be obtained is preferably 80°C or more, more preferably 90°C or more from the viewpoint of improving productivity. The reaction temperature in the step A1 when the nitrogen atom-containing furan resin is to be obtained is preferably 125°C or less, more preferably 115°C or less, even more preferably 110°C or less from the viewpoint of suppressing condensation between furfuryl alcohol molecules to increase the BHMF content.

### (Reaction time)

The reaction time in the step A1 when the nitrogen atom-containing furan resin is to be obtained is preferably 200 minutes or more, more preferably 250 minutes or more, even more preferably 280 minutes or more from the viewpoints of reducing the furfuryl alcohol content and of suppressing condensation between furfuryl alcohol molecules to increase the BHMF content. The reaction time in the step A1 when the nitrogen atom-containing furan resin is to be obtained is preferably 750 minutes or less, more preferably 620 minutes or less, even more preferably 600 minutes or less, still even more preferably 570 minutes or less, still even more preferably 520 minutes or less, still even more preferably 490 minutes or less from the viewpoint of improving productivity.

### (Reaction pressure)

The reaction pressure in the step A1 when the nitrogen atom-containing furan resin is to be obtained may be reduced pressure or normal pressure. From the viewpoint of shortening the reaction time, reduced pressure is preferred.

### (Step A2)

### (Reaction temperature)

The reaction temperature in the step A2 when the nitrogen atom-containing furan resin is to be obtained is preferably 80°C or more, more preferably 90°C or more, even more preferably 95°C or more from the viewpoints of improving productivity and of reducing the content of free furfuryl alcohol and aldehyde. The reaction temperature in the step A2 when the nitrogen atom-containing furan resin is to be obtained is preferably 135°C or less, more preferably 125°C or less, even more preferably 115°C or less from the viewpoints of preventing a reduction in BHMF content and of suppressing an increase in viscosity.

### (Reaction time)

The reaction time in the step A2 when the nitrogen atom-containing furan resin is to be obtained is preferably 30 minutes or more from the viewpoint of reducing the content of free furfuryl alcohol and aldehyde. The reaction time in the step A2 when the nitrogen atom-containing furan resin is to be obtained is preferably 3 hours or less, more preferably 2 hours or less from the viewpoints of improving productivity, of preventing a reduction in BHMF content, and of suppressing an increase in viscosity.

### (Reaction pressure)

The reaction pressure in the step A2 when the nitrogen atom-containing furan resin is to be obtained may be reduced pressure or normal pressure. From the viewpoint of shortening the reaction time, reduced pressure is preferred.

When the nitrogen atom-containing furan resin is to be obtained, a step A3 may be performed after the step A2 to reduce the amount of a free aldehyde contained in the binder resin.

### (Step A3)

### (Reaction temperature)

The reaction temperature in the step A3 is preferably 50°C or more, more preferably 60°C or more from the viewpoints of improving productivity and of reducing the content of free aldehyde. The reaction temperature in the step A3 is preferably 80°C or less from the viewpoints of preventing a reduction in BHMF content and of suppressing an increase in viscosity.

### (Reaction time)

The reaction time in the step A3 is preferably 10 minutes or more from the viewpoint of reducing the content of free aldehydes. The reaction time in the step A3 is preferably 1 hours or more, more preferably 40 minutes or more, even more preferably 30 minutes or more from the viewpoint of improving productivity.

### (Reaction pressure)

The reaction pressure in the step A3 may be reduced pressure or normal pressure. From the viewpoint of shortening the reaction time, reduced pressure is preferred.

The furfuryl alcohol content in the binder resin is preferably 10 mass% or more, more preferably 15 mass% or more from the viewpoint of improving the mold strength. The furfuryl alcohol content in the binder resin is preferably 35 mass% or less, more preferably 30 mass% or less, even more preferably 25 mass% or less from the viewpoint of improving the working environment. The furfuryl alcohol content in the binder resin can be measured with the method described in Examples.

The BHMF content in the binder resin is preferably 8 mass% or more, more preferably 10 mass% or more, even more preferably 15 mass% or more, still even more preferably 20 mass% or more from the viewpoint of improving the mold strength. The BHMF content in the binder resin is preferably 40 mass% or less, more preferably 35 mass% or less, even more preferably 30 mass% or less from the viewpoint of suppressing deposition of BHMF. The BHMF content in the binder resin can be measured with the method described in Examples.

The furan resin content in the binder resin is preferably 30 mass% or more, more preferably 35 mass% or more, even more preferably 40 mass% or more, still even more preferably 45 mass% or more from the viewpoint of improving the mold strength. The furan resin content in the binder resin is preferably 60 mass% or less, more preferably 58 mass% or less from the viewpoint of improving the mold strength. The furan resin content in the binder resin can be measured with the method described in Examples.

### <Binder composition for making foundry molds>

A binder composition for making foundry molds according to the present embodiment (hereinafter also simply referred to as a binder composition) includes furfuryl alcohol (component A), BHMF (component B), the furan resin (component C), and water (component D) and satisfies the following conditions (1) to (4):
Condition (1): the content of the component A in the binder composition is 30 mass% or less;
Condition (2): the content of the component B in the binder composition is 7 mass% or more;
Condition (3): the content of the component D in the binder composition is 25 mass% or less; and
Condition (4): the content of the "catalyst a" is 0.01 g or more and 0.50 g or less and the content of the "neutralized salt a" in terms of acid is 0.13 g or more per 100 g of the binder composition.

According to the binder composition for making foundry molds of the present embodiment, the content of furfuryl alcohol in monomer form is low, the content of BHMF is high, the viscosity is low, and mold strength can be improved.

### [Furfuryl alcohol (component A)]

The content of the component A in the binder composition is 30 mass% or less, preferably 25 mass% or less, more preferably 20 mass% or less, and even more preferably 15 mass% or less from the viewpoint of improving the working environment. The content of the component A in the binder composition is preferably more than 0 mass%, more preferably 5 mass% or more, even more preferably 10 mass% or more, still even more preferably 15 mass% or more, and still even more preferably 20 mass% or more from the viewpoints of improving the mold strength and of reducing viscosity.

### [BHMF (component B)]

The content of the component B in the binder composition is 7 mass% or more, preferably 8 mass% or more, more preferably 10 mass% or more, even more preferably 15 mass% or more from the viewpoint of improving the mold strength. The content of the component B in the binder composition is preferably 30 mass% or less, more preferably 25 mass% or less, even more preferably 20 mass% or less from the viewpoint of suppressing deposition of BHMF.

### [Furan resin (component C)]

The content of the component C in the binder composition is preferably 25 mass% or more, more preferably 27 mass% or more, even more preferably 28 mass% or more from the viewpoint of improving the mold flexibility. The content of the component C in the binder composition is preferably 50 mass% or less, more preferably 49 mass% or less from the viewpoints of reducing viscosity and of improving the mold strength.

The ratio of the content of the component C to the content of the component B in the binder composition (the content of the component C/the content of the component B) is preferably 1 or more, more preferably 1.4 or more, even more preferably 2 or more from the viewpoint of improving the mold flexibility. The ratio of the content of the component C to the content of the component B in the binder composition is preferably 7 or less, more preferably 6 or less, even more preferably 5 or less, still even more preferably 4 or less, still even more preferably 3 or less from the viewpoints of reducing viscosity and of improving the mold strength.

### [Water (component D)]

The content of the component D in the binder composition is 25 mass% or less, preferably 20 mass% or less from the viewpoint of improving the mold strength. The content of the component D in the binder composition is preferably 5 mass% or more, more preferably 10 mass% or more, even more preferably 15 mass% or more from the viewpoint of reducing viscosity. The content of the component D can be measured with the method described in Examples.

### [Catalyst a]

The content of the "catalyst a" in 100 g of the binder composition is 0.01 g or more, preferably 0.02 g or more, more preferably 0.025 g or more, even more preferably 0.03 g or more from the viewpoint of increasing mold strength. The content of the "catalyst a" in 100 g of the binder composition is 0.50 g or less, preferably 0.40 g or less, more preferably 0.20 g or less, even more preferably 0.13 g or less, still even more preferably 0.10 g or less from the viewpoints of increasing mold strength, and of suppressing deposition of the "catalyst a".

### [Neutralized salt a]

The content of the "neutralized salt a" in terms of acid in 100 g of the binder composition is 0.13 g or more, preferably 0.19 g or more, more preferably 0.3 g or more from the viewpoint of increasing mold strength. The content of the "neutralized salt a" in terms of acid in 100 g of the binder composition is preferably 15 g or less, more preferably 11 g or less, even more preferably 6 g or less, still even more preferably 2.2 g or less from the viewpoints of increasing mold strength and of suppressing deposition of the "neutralized salt a".

The total of the "catalyst a" content and the "neutralized salt a" content in terms of acid in 100 g of the binder composition is preferably 0.2 g or more, more preferably 0.3 g or more, even more preferably 0.4 g or more, still even more preferably 0.5 g or more from the viewpoint of increasing mold strength. The total of the "catalyst a" content and the "neutralized salt a" content in terms of acid in 100 g of the binder composition is preferably 15 g or less, more preferably 11 g or less, even more preferably 6 g or less, still even more preferably 2.5 g or less from the viewpoints of increasing mold strength, of suppressing deposition of the "neutralized salt a", and of economic efficiency.

The ratio of the "neutralized salt a" content in terms of acid to the total of the "catalyst a" content and the "neutralized salt a" content in terms of acid ["neutralized salt a" content in terms of acid/"catalyst a" content + "neutralized salt a" content in terms of acid] in 100 g of the binder composition is preferably 0.25 or more, more preferably 0.30 or more, even more preferably 0.50 or more, even more preferably 0.85 or more, still even more preferably 0.90 or more, still even more preferably 0.93 or more from the viewpoint of increasing mold strength, and is preferably less than 1, more preferably 0.97 or less, even more preferably 0.96 or less from the same viewpoint.

### [Hardening promoter]

The binder composition may contain a hardening promoter from the viewpoint of improving mold strength. From the viewpoint of improving mold strength, the hardening promoter is preferably at least one selected from the group consisting of phenol derivatives, aromatic dialdehydes, fand tannins.

Examples of the phenol derivatives include resorcin, cresol, hydroquinone, phloroglucinol, and methylene bisphenol. From the viewpoint of improving mold strength, the phenol derivative content of the binder composition is preferably 1 to 25 mass%, more preferably 2 to 15 mass%, even more preferably 3 to 10 mass%.

Examples of the aromatic dialdehydes include terephthalaldehyde, phthalaldehyde, and isophthalaldehyde, and derivatives thereof. The derivatives thereof refer to compounds each having an aromatic ring of an aromatic compound having two formyl groups as a basic skeleton and a substituent group, such as an alkyl group, attached to the aromatic ring. From the viewpoints of sufficiently dissolving the aromatic dialdehyde in the furan resin and of reducing the odor of the aromatic dialdehyde itself, the aromatic dialdehyde content of the binder composition is preferably 0.1 to 15 mass%, more preferably 0.5 to 10 mass%, even more preferably 1 to 5 mass%.

Examples of the tannins include condensed tannins and hydrolyzable tannins. Examples of the condensed tannins and hydrolyzable tannins include tannins having a pyrogallol skeleton and tannins having a resorcin skeleton. Alternatively, a bark extract containing such tannins or an extract containing such tannins from a natural product such as plant-derived leaves, fruits, or seeds or galls parasitic on plants may be added. From the viewpoints of improving hardening speed and of improving mold strength, the tannins content of the binder composition is preferably 0.2 to 10 mass%, more preferably 1.0 to 7 mass%, even more preferably 1.9 to 5 mass%.

The viscosity of the binder composition at 25°C is preferably 120 mPa·s or less, more preferably 70 mPa·s or less, even more preferably 60 mPa·s or less from the viewpoint of workability during the production of the mold composition and a mold. The viscosity of the binder composition at 25°C can be measured with the method described in the Examples.

The binder composition may further contain an additive such as a silane coupling agent. For example, the binder composition preferably contains a silane coupling agent because the final strength of a resulting mold can further be improved. Examples of the silane coupling agent to be used include: aminosilanes such as N-β-(aminoethyl)-γ-aminopropylmethyldimethoxysilane, N-β-(aminoethyl)-γ-aminopropyltrimethoxysilane, N-β-(aminoethyl)-γ-aminopropyltriethoxysilane, and 3-aminopropyltrimethoxysilane; epoxysilanes such as 3-glycidoxypropyltrimethoxysilane, 3-glycidoxypropyltriethoxysilane, 3-glycidoxypropylmethyldimethoxysilane, 3-glycidoxypropylmethyldiethoxysilane, and 3-glycidoxypropyltriethoxysilane; ureidosilane; mercaptosilane; sulfidosilane; methacryloxysilane; and acryloxysilane. Aminosilanes, epoxysilanes, and ureidosilane are preferred. Aminosilanes and epoxysilanes are more preferred. Among aminosilanes, N-β-(aminoethyl)-γ-aminopropylmethyldimethoxysilane is preferred. Among epoxysilanes, 3-glycidoxypropylmethyldimethoxysilane is preferred.

From the viewpoint of improving the strength of molds, the silane coupling agent content of the binder composition is preferably 0.01 mass% or more, and more preferably 0.05 mass% or more. From the same viewpoint, the silane coupling agent content of the binder composition is preferably 5 mass% or less, more preferably 3 mass% or less, even more preferably 1 mass% or less, and even more preferably 0.5 mass% or less.

The binder composition according to the present embodiment is suitably used for making self-hardening molds. Here, the self-hardening mold refers to a mold obtained by mixing sand with a binder composition and a hardening agent composition so that the mixture is hardened by a polymerization reaction proceeding with time. The temperature of the sand used at this time is in the range of -20°C to 50°C, preferably 0°C to 40°C. A mold can properly be hardened by adding a suitable amount of a hardening agent selected for sand having such a temperature to the sand.

### <Composition for making foundry molds>

A composition for making foundry molds according to the present embodiment includes: the binder composition; and a curing agent composition containing a curing agent capable of hardening the binder composition for making foundry molds. The composition for making foundry molds has the same effect as the binder composition.

### [Hardening agent composition]

The hardening agent composition to be used is not particularly limited as long as a hardening agent for hardening the above-described binder composition is contained. The hardening agent to be used may be, for example, at least one conventionally-known acid-based hardening agent, and examples thereof include sulfonic acid-based compounds such as xylene sulfonic acid (especially, m-xylene sulfonic acid), toluene sulfonic acid (especially, p-toluene sulfonic acid), and methanesulfonic acid, phosphoric acid-based compounds such as phosphoric acid and acidic phosphoric esters, and sulfuric acid or the like. These compounds are preferably in the form of an aqueous solution from the viewpoint of handleability. The hardening agent composition may further contain at least one solvent selected from the group consisting of alcohols, ether alcohols, and esters or a carboxylic acid.

The content of the solvent in the curing agent composition is appropriately adjusted in order to obtain a desired reaction rate and desired mold strength according to the temperature of the working environment and the temperature of the refractory particles, and is generally preferably 5 mass% or more, more preferably 10 mass% or more, and even more preferably 20 mass% or more from the viewpoint of dissolving the curing agent composition. The content of the solvent in the curing agent composition is preferably 90 mass% or less, more preferably 80 mass% or less, and even more preferably 70 mass% or less from the viewpoint of improving the mold strength.

From the viewpoint of improving the strength of molds, the hardening agent content of the hardening agent composition is preferably 10 mass% or more, more preferably 20 mass% or more, and even more preferably 30 mass% or more. From the viewpoint of dissolving the hardening agent composition, the hardening agent content of the hardening agent composition is preferably 95 mass% or less, more preferably 90 mass% or less, even more preferably 80 mass% or less.

The mass ratio of the binder composition and the curing agent is preferably in the range of 10 to 60 parts by mass, more preferably in the range of 10 to 40 parts by mass, and even more preferably in the range of 10 to 30 parts by mass based on 100 parts by mass of the binder composition from the viewpoint of improving the hardening speed and improving the mold strength.

### <Composition for foundry molds>

A composition for foundry molds according to the present embodiment includes: refractory particles; the binder composition; and the curing agent composition. The composition for foundry molds has the same effect as the binder composition.

### [Refractory particles]

As the refractory particles, one or more kinds of conventionally known refractory particles such as silica sand, chromite sand, zircon sand, olivine sand, alumina sand, mullite sand, and synthetic mullite sand can be used, and for example, refractory particles obtained by collecting or regenerating used refractory particles can also be used. Among them, silica sand is preferably contained.

In the composition for foundry molds, the mass ratio among the refractory particles, the binder composition, and the curing agent can be appropriately set, but from the viewpoint of improving the hardening speed and improving the mold strength, the amount of the binder composition is preferably in the range of 0.5 to 1.5 parts by mass, and the amount of the curing agent is preferably in the range of 0.07 to 1 part by mass based on 100 parts by mass of the refractory particles.

### <Method for producing a mold>

A method for producing a mold according to the present embodiment includes: a mixing step of mixing the refractory particles, the binder composition, and the curing agent composition to obtain the composition for foundry molds; and a hardening step of filling a mold with the composition for foundry molds and hardening the composition for foundry molds. The method for producing a mold has the same effect as the binder composition.

In the mixing step, the order of adding and mixing the binder composition, the curing agent composition, and the refractory particles is not particularly limited, and the binder composition and the curing agent composition may be mixed to produce a composition for making foundry molds and then the composition for making foundry molds and the refractory particles may be mixed, or the binder composition, the curing agent composition, and the refractory particles may be separately added and mixed, but from the viewpoint of storage stability and productivity of a mold, the binder composition, the curing agent composition, and the refractory particles are preferably mixed to obtain a composition for foundry molds. From the viewpoint of improving the mold strength, it is preferable that the curing agent composition be added to and mixed with the refractory particles, and then the binder composition be added to and mixed with the resulting mixture. In the case of using two or more curing agent compositions, the curing agent compositions may be mixed and then added, or may be separately added.

A method for mixing raw materials to be used in the mixing step may be a well-known general method, and examples thereof include a method in which raw materials added to a batch mixer are kneaded and a method in which raw materials supplied to a continuous mixer are kneaded.

In the method for producing a mold, a conventional foundry mold production process can be used without change to produce a foundry mold, except for the mixing step.

In relation to the above-described embodiment, the present invention further discloses the following compositions, methods of manufacture, or uses.
<1> A method for producing a binder resin for making foundry molds which contains furfuryl alcohol, bishydroxymethylfuran, and a furan resin, the method including
   a step A in which furfuryl alcohol and formaldehyde are reacted in a presence of at least one "catalyst a" selected from among phosphoric acid and boric acid and at least one "neutralized salt a" selected from among a mono-neutralized salt of phosphoric acid and a mono-neutralized salt of boric acid, wherein
   in the step A, an amount of the "catalyst a" used is 0.0002 mol or more and 0.01 mol or less per mole of furfuryl alcohol, and an amount of the "neutralized salt a" used is 0.003 mol or more in terms of acid per mole of furfuryl alcohol.
<2> The method according to <1>, the method for producing a binder resin for making foundry molds which contains furfuryl alcohol, bishydroxymethylfuran, and a furan resin, the method including
   a step A in which furfuryl alcohol and formaldehyde are reacted in a presence of at least one "catalyst a" selected from among phosphoric acid and boric acid and at least one "neutralized salt a" selected from among a mono-neutralized salt of phosphoric acid and a mono-neutralized salt of boric acid, wherein
   in the step A, an amount of the "catalyst a" used is 0.0002 mol or more and 0.01 mol or less per mole of furfuryl alcohol, and an amount of the "neutralized salt a" used is 0.003 mol or more and 0.15 mol or less in terms of acid per mole of furfuryl alcohol,
   wherein the "neutralized salt a" is at least one selected from among an alkali metal salt and an amine salt,
   wherein the furan resin is at least one selected from the group consisting of a urea-modified furan resin and a condensation product of furfuryl alcohol and an aldehyde and at least one selected from the group consisting of co-condensation products of two or more selected from the above group.
<3> The method according to <1> or <2>, the method for producing a binder resin for making foundry molds which contains furfuryl alcohol, bishydroxymethylfuran, and a furan resin, the method including
   a step A in which furfuryl alcohol and formaldehyde are reacted in a presence of at least one "catalyst a" selected from among phosphoric acid and boric acid and at least one "neutralized salt a" selected from among a mono-neutralized salt of phosphoric acid and a mono-neutralized salt of boric acid, wherein
   in the step A, an amount of the "catalyst a" used is 0.0004 mol or more and 0.008 mol or less per mole of furfuryl alcohol, and an amount of the "neutralized salt a" used is 0.005 mol or more and 0.04 mol or less in terms of acid per mole of furfuryl alcohol,
   wherein a degree of neutralization of the "catalyst a" [amount of the "neutralized salt a" used/(amount of the "catalyst a" used + amount of the "neutralized salt a" used)] is 93% or more and 97% or less.
   wherein the "neutralized salt a" is at least one selected from among an alkali metal salt and an amine salt,
   wherein the furan resin is at least one selected from the group consisting of a urea-modified furan resin and a condensation product of furfuryl alcohol and an aldehyde and at least one selected from the group consisting of co-condensation products of two or more selected from the above group.
<4> The method according to any one of <1> to <3>, wherein in the step A, a pH of a reaction liquid before start of reaction is 2 or more and 5.5 or less.
<5> The method according to any one of <1> to <4>, wherein a furfuryl alcohol content in the binder resin for making foundry molds is 10 mass% or more and 30 mass% or less, wherein a bishydroxymethylfuran content in the binder resin for making foundry molds is 8 mass% or more and 40 mass% or less, wherein a furan resin content in the binder resin for making foundry molds is 30 mass% or more and 60 mass% or less.
<6> The method according to any one of the <1> to <5>, wherein the "neutralized salt a" is an amine salt, and the amine salt is a tertiary amine salt having an alkyl group containing 2 or more and 10 or less carbon atoms.
<7> A binder composition for making foundry molds, the binder composition including furfuryl alcohol (component A), bishydroxymethylfuran (component B), a furan resin (component C), and water (component D) and satisfying the following conditions (1) to (4):
   Condition (1): a content of the component A in the binder composition for making foundry molds is 30 mass% or less;
   Condition (2): a content of the component B in the binder composition for making foundry molds is 7 mass% or more;
   Condition (3): a content of the component D in the binder composition for making foundry molds is 25 mass% or less; and
   Condition (4): a content of at least one "catalyst a" selected from among phosphoric acid and boric acid is 0.01 g or more and 0.50 g or less and a content of at least one "neutralized salt a" selected from among a mono-neutralized salt of phosphoric acid and a mono-neutralized salt of boric acid in terms of acid is 0.13 g or more per 100 g of the binder composition for making foundry molds.
<8> The binder composition for making foundry molds according to the <7>, the binder composition including furfuryl alcohol (component A), bishydroxymethylfuran (component B), a furan resin (component C), and water (component D) and satisfying the following conditions (1) to (4):
   Condition (1): the content of the component A in the binder composition for making foundry molds is more than 0 mass% and 30 mass% or less;
   Condition (2): the content of the component B in the binder composition for making foundry molds is 7 mass% or more and 30 mass% or less;
   Condition (3): the content of the component D in the binder composition for making foundry molds is 5 mass% or more and 25 mass% or less; and
   Condition (4): the content of at least one "catalyst a" selected from among phosphoric acid and boric acid is 0.01 g or more and 0.50 g or less and the content of at least one "neutralized salt a" selected from among a mono-neutralized salt of phosphoric acid and a mono-neutralized salt of boric acid in terms of acid is 0.13 g or more and 15 g or less per 100 g of the binder composition for making foundry molds, and the "neutralized salt a" is at least one selected from among an alkali metal salt and an amine salt;
   wherein the furan resin is at least one selected from the group consisting of a urea-modified furan resin and a condensation product of furfuryl alcohol and an aldehyde and at least one selected from the group consisting of co-condensation products of two or more selected from the above group.
<9> The binder composition for making foundry molds according to the <7> or <8>, the binder composition including furfuryl alcohol (component A), bishydroxymethylfuran (component B), a furan resin (component C), and water (component D) and satisfying the following conditions (1) to (4):
   Condition (1): the content of the component A in the binder composition for making foundry molds is 10 mass% or more and 30 mass% or less;
   Condition (2): the content of the component B in the binder composition for making foundry molds is 7 mass% or more and 25 mass% or less;
   Condition (3): the content of the component D in the binder composition for making foundry molds is 10 mass% or more and 25 mass% or less; and
   Condition (4): the content of at least one "catalyst a" selected from among phosphoric acid and boric acid is 0.01 g or more and 0.50 g or less and the content of at least one "neutralized salt a" selected from among a mono-neutralized salt of phosphoric acid and a mono-neutralized salt of boric acid in terms of acid is 0.13 g or more and 15 g or less per 100 g of the binder composition for making foundry molds, and the "neutralized salt a" is at least one selected from among an alkali metal salt and an amine salt;

   wherein the furan resin is at least one selected from the group consisting of a urea-modified furan resin and a condensation product of furfuryl alcohol and an aldehyde and at least one selected from the group consisting of co-condensation products of two or more selected from the above group,
   wherein a ratio of the content of the component C to the content of the component B (the content of the component C/the content of the component B) is 1 or more and 7 or less.
<10> The binder composition for making foundry molds according to any one of the <7> to <9>, the binder composition including furfuryl alcohol (component A), bishydroxymethylfuran (component B), a furan resin (component C), and water (component D) and satisfying the following conditions (1) to (4):
   Condition (1): the content of the component A in the binder composition for making foundry molds is 10 mass% or more and 30 mass% or less;
   Condition (2): the content of the component B in the binder composition for making foundry molds is 7 mass% or more and 25 mass% or less;
   Condition (3): the content of the component D in the binder composition for making foundry molds is 10 mass% or more and 25 mass% or less; and
   Condition (4): the content of at least one "catalyst a" selected from among phosphoric acid and boric acid is 0.025 g or more and 0.40 g or less and the content of at least one "neutralized salt a" selected from among a mono-neutralized salt of phosphoric acid and a mono-neutralized salt of boric acid in terms of acid is 0.3 g or more and 2.2 g or less per 100 g of the binder composition for making foundry molds, and the "neutralized salt a" is at least one selected from among an alkali metal salt and an amine salt;

   wherein the furan resin is at least one selected from the group consisting of a urea-modified furan resin and a condensation product of furfuryl alcohol and an aldehyde and at least one selected from the group consisting of co-condensation products of two or more selected from the above group,
   wherein the ratio of the content of the component C to the content of the component B (the content of the component C/the content of the component B) is 1 or more and 7 or less,
   wherein a ratio of the content of the "neutralized salt a" in terms of acid to a total of the content of the "catalyst a" and the content of the "neutralized salt a" in terms of acid [the content of the "neutralized salt a" in terms of acid/the content of the "catalyst a" + the content of the "neutralized salt a" in terms of acid] is 0.93 or more and 0.97 or less.
<11> The binder composition for making foundry molds according to any one of the <7> to <10>, whose content of the component C is 25 mass% or more and 50 mass% or less.
<12> The binder composition for making foundry molds according to any one of the <7> to <11>, wherein the "neutralized salt a" is an amine salt, and the amine salt is a tertiary amine salt having an alkyl group containing 2 or more and 10 or less carbon atoms.
<13> A composition for making foundry molds, the composition including: the binder composition for making foundry molds according to any one of the <7> to <12>; and a curing agent composition containing a curing agent for hardening the binder composition for making foundry molds.
<14> A composition for foundry molds, the composition including: refractory particles; the binder composition for making foundry molds according to any one of the <7> to <12>; and a curing agent composition containing a curing agent for hardening the binder composition for making foundry molds.
<15> A method for producing a foundry mold, the method including: a mixing step in which refractory particles, the binder composition for making foundry molds according to any one of the <7> to <12>, and a curing agent composition containing a curing agent for hardening the binder composition for making foundry molds are mixed to obtain a composition for foundry molds; and a hardening step in which the composition for foundry molds is filled into a pattern and hardened.

### Examples

Hereinbelow, the present invention will specifically be described with reference to examples etc.

### <Methods of measuring physical properties>

### [Content of water]

Measurement was performed in accordance with the Karl-Fischer method shown in JIS K 0068 using an automatic water-content measuring instrument (AQV-2200A manufactured by Hiranuma Sangyo Co., Ltd.).

### [Contents of furfuryl alcohol and bishydroxymethylfuran]

Measurement was performed by gas chromatography analysis under the following conditions using gas chromatography (GC-2014S manufactured by SHIMADZU CORPORATION).
- Calibration curve: prepared using furfuryl alcohol and bishydroxymethylfuran
- Internal standard solution: 1,6-hexanediol
- Column: PEG-20M Chromosorb WAW DMCS 60/80 mesh (manufactured by GL Sciences Inc.)
- Column temperature: 80 to 200°C (8°C /min)
- Injection temperature: 210°C
- Detector temperature: 250°C carrier gas: 50 mL/min (He)

### [Furan resin content]

The furan resin content was calculated by subtracting the furfuryl alcohol content, the water content, the BHMF content, and a silane coupling agent content.

### [Measurement of pH of reaction liquid before start of reaction]

A 50% aqueous solution was prepared, and the pH of the aqueous solution was measured at 25°C using a pH meter (Personal pH Meter PH71 manufactured by Yokogawa Electric Corporation).

### [Content of non-neutralized phosphoric acid and boric acid and content of mono-neutralized salts of phosphoric acid and boric acid]

Measurement was performed using a potentiometric titrator (COM-A19S manufactured by Hiranuma Co., Ltd., titrant: 0.1 mol/L cyclohexylamine). The content of non-neutralized phosphoric acid and boric acid was measured from the volume of the titrant at the first inflection point appearing at about pH 4, the content of phosphoric acid and boric acid was measured from the volume of the titrant between the first inflection point and the second inflection point appearing at about pH 9, and the content of mono-neutralized salts of phosphoric acid and boric acid was calculated from the difference between them.

### [Viscosity]

Viscosity was measured with an E-type viscometer (RE-80R, manufactured by Toki Sangyo Co., Ltd.) at 25°C using a standard rotor (cone angle 1° 34', cone radius: 24 mm) at a rotation speed of 100 rpm.

### <EXAMPLES>

### [Example 1-1]

First, 713.86 g of furfuryl alcohol, 7.04 g of a 48 mass% aqueous sodium hydroxide solution, and 201.88 g of 92 mass% paraformaldehyde were charged into a three-necked flask equipped with a stirrer, a cooling tube, and a thermometer while being stirred, and were heated to 60°C by a mantle heater. The resultant was cooled with water to 30°C, and then 10.04 g of an 85 mass% aqueous phosphoric acid solution was added thereto. The amount of phosphoric acid was 0.0003 mol per mole of furfuryl alcohol, and the amount of a mono-neutralized salt of phosphoric acid was 0.0117 mol per mole of furfuryl alcohol. The pH of the reaction liquid was measured before the start of reaction, and then the reaction liquid was heated to 100°C to perform reaction until the amount of a furfuryl alcohol monomer was reduced to 33%. In this way, a resin of Intermediate Production Example 1 was obtained. The time that elapsed before the amount of furfuryl alcohol was reduced to 33 mass% and the amount of BHMF at that time are shown in Table 1.

### [Examples 1-2 to 1-17 and Comparative Examples 1-1 to 1-6]

A resin of each of Intermediate Production Examples 2 to 17 and 51 to 56 was obtained in the same manner as in Example 1-1 except that a basic species shown in Table 1 was used and the amount of the basic species was changed to achieve the amount of phosphoric acid and the amount of a mono-neutralized salt of phosphoric acid shown in Table 1. The time that elapsed before the concentration (content) of furfuryl alcohol in the reaction liquid was reduced to 33 mass% and the concentration (content) of BHMF at that time are shown in Table 1.

### [Example 1-18]

A resin of Intermediate Production Example 18 was obtained in the same manner as in Example 1-1 except that boric acid was used as an acid catalyst and the amount of the basic species was changed to achieve the amount of boric acid and the amount of a mono-neutralized salt of boric acid shown in Table 1. The time that elapsed before the amount of furfuryl alcohol was reduced to 33 % and the amount of BHMF at that time are shown in Table 1. It should be noted that FFA in the tables refers to furfuryl alcohol.

**[Table 1]**

| | Intermediate Production Example | Acid catalyst | Amount of catalyst (mole ratio with respect to FFA) | Basic species | Degree of neutralization | Amount of non-neutralized acid (mole ratio with respect to FFA) | Amount of mono-neutralized salt (mole ratio with respect to FFA) | pH | Amount of BHMF (wt%) | Reaction time^{*1} (min) |
|---|---|---|---|---|---|---|---|---|---|---|
| Example 1-1 | Intermediate Production Example 1 | Phosphoric acid | 0.0120 | NaOH | 97.4 | 0.0003 | 0.0117 | 3.9 | 22.0 | 600 |
| Example 1-2 | Intermediate Production Example 2 | Phosphoric acid | 0.0120 | NaOH | 95.0 | 0.0006 | 0.0114 | 3.6 | 26.2 | 510 |
| Example 1-3 | Intermediate Production Example 3 | Phosphoric acid | 0.0120 | NaOH | 90.0 | 0.0012 | 0.0108 | 3.5 | 26.0 | 480 |
| Example 1-4 | Intermediate Production Example 4 | Phosphoric acid | 0.0120 | NaOH | 50.0 | 0.0060 | 0.0060 | 2.8 | 24.4 | 330 |
| Example 1-5 | Intermediate Production Example 5 | Phosphoric acid | 0.0120 | NaOH | 30.0 | 0.0084 | 0.0036 | 2.5 | 20.3 | 240 |
| Example 1-6 | Intermediate Production Example 6 | Phosphoric acid | 0.0200 | NaOH | 95.0 | 0.0010 | 0.0190 | 3.8 | 26.0 | 450 |
| Example 1-7 | Intermediate Production Example 7 | Phosphoric acid | 0.0170 | NaOH | 65.5 | 0.0059 | 0.0111 | 2.8 | 24.0 | 330 |
| Example 1-8 | Intermediate Production Example 8 | Phosphoric acid | 0.0066 | NaOH | 90.9 | 0.0006 | 0.0060 | 3.0 | 19.0 | 570 |
| Example 1-9 | Intermediate Production Example 9 | Phosphoric acid | 0.0046 | NaOH | 87.0 | 0.0006 | 0.0040 | 3.1 | 16.0 | 600 |
| Example 1-10 | Intermediate Production Example 10 | Phosphoric acid | 0.1000 | NaOH | 99.4 | 0.0006 | 0.0994 | 3.9 | 23.4 | 450 |
| Example 1-11 | Intermediate Production Example 11 | Phosphoric acid | 0.1000 | NaOH | 99.7 | 0.0003 | 0.0997 | 3.9 | 20.0 | 390 |
| Example 1-12 | Intermediate Production Example 12 | Phosphoric acid | 0.0120 | TPA | 95.0 | 0.0006 | 0.0114 | 3.8 | 32.1 | 480 |
| Example 1-13 | Intermediate Production Example 13 | Phosphoric acid | 0.0120 | TOA | 95.0 | 0.0006 | 0.0114 | 3.8 | 32.4 | 570 |
| Example 1-14 | Intermediate Production Example 14 | Phosphoric acid | 0.0120 | TIPA | 95.0 | 0.0006 | 0.0114 | 3.8 | 33.3 | 450 |
| Example 1-15 | Intermediate Production Example 15 | Phosphoric acid | 0.0120 | TEA | 95.0 | 0.0006 | 0.0114 | 3.8 | 31.0 | 450 |
| Example 1-16 | Intermediate Production Example 16 | Phosphoric acid | 0.0200 | TIPA | 95.0 | 0.0010 | 0.0190 | 3.8 | 35.1 | 390 |
| Example 1-17 | Intermediate Production Example 17 | Phosphoric acid | 0.0400 | TIPA | 95.0 | 0.0020 | 0.0380 | 3.9 | 34.0 | 300 |
| Example 1-18 | Intermediate Production Example 18 | Boric acid | 0.0120 | NaOH | 90.0 | 0.0012 | 0.0108 | 5.0 | 20.3 | 720 |
| Comparative Example 1-1 | Intermediate Production Example 51 | Phosphoric acid | 0.0120 | - | 0.0 | 0.0120 | 0.0000 | 1.5 | 2.2 | 60 |
| Comparative Example 1-2 | Intermediate Production Example 52 | Phosphoric acid | 0.0006 | - | 0.0 | 0.0006 | 0.0000 | 2.9 | 5.3 | 630 |
| Comparative Example 1-3 | Intermediate Production Example 53 | Phosphoric acid | 0.0120 | NaOH | 10.0 | 0.0108 | 0.0012 | 1.8 | 5.0 | 90 |
| Comparative Example 1-4 | Intermediate Production Example 54 | Phosphoric acid | 0.0230 | NaOH | 48.7 | 0.0118 | 0.0112 | 1.6 | 2.4 | 60 |
| Comparative Example 1-5 | Intermediate Production Example 55 | Phosphoric acid | 0.0026 | NaOH | 76.9 | 0.0006 | 0.0020 | 3.0 | 5.0 | 690 |
| Comparative Example 1-6 | Intermediate Production Example 56 | Phosphoric acid | 0.0120 | NaOH | 100.0 | 0.0000 | 0.0120 | 6.5 | 0.0 | 960 |

| | | | | | | | | | | |
|---|---|---|---|---|---|---|---|---|---|---|
| *1: The time that elapsed before the amount of furfuryl alcohol in the reaction liquid is reduced to 33%. | | | | | | | | | | |

### [Examples 2-1 to 2-18, Comparative Examples 2-1 to 2-6]

First, 57.10 g of urea was charged into the same reactor containing 932.82 g of each of the resins obtained in Intermediate Production Examples 1 to 18 and Intermediate Production Examples 51 to 56, and the resultant was subjected to reaction at 105°C for 1 hour and then air-cooled to 70°C. Then, 10.08 g of urea was added thereto, and the resultant was subjected to reaction at 70°C for 20 minutes. In this way, final reaction products 1 to 18 and final reaction products 51 to 56 were obtained. The compositions of the respective final reaction products are shown in Table 2.

### [Example 2-19]

Into the same reactor containing 932.82 g of the resin obtained in Intermediate Production Example 2, 57.10 g of urea was charged, and the resultant was subjected to reaction at 105°C for 1 hour to obtain a final reaction product 19. The composition of the final reaction product 19 is shown in Table 2.

### [Example 2-20]

The resin obtained in Intermediate Production Example 2 was regarded as a final reaction product 20.

### [Examples 3-1 to 3-19, Comparative Examples 3-1 to 3-6]

Each of the final reaction products 1 to 19 and 51 to 56 obtained above in Production Examples, furfuryl alcohol, water, and a silane coupling agent were blended so that the content of furfuryl alcohol was about 19 mass% and the content of water was about 24 mass%. In this way, binder compositions for making foundry molds of Examples 3-1 to 3-19 and Comparative Examples 3-1 to 3-6 were obtained.

### [Example 4-1, Comparative Example 4-1]

Each of the final reaction products 2 and 54 obtained above in Production Examples, furfuryl alcohol, water, and a silane coupling agent were blended so that the content of furfuryl alcohol was about 19 mass% and the content of water was about 15 mass%. In this way, binder compositions for making foundry molds of Example 4-1 and Comparative Example 4-1 were obtained.

### [Example 5-1, Comparative Example 5-1]

Each of the final reaction products 2 and 54 obtained above in Production Examples, furfuryl alcohol, water, and a silane coupling agent were blended so that the content of furfuryl alcohol was about 25 mass% and the content of water was about 15 mass%. In this way, binder compositions for making foundry molds of Example 5-1 and Comparative Example 5-1 were obtained.

### [Examples 6-1 to 6-2, Comparative Example 6-1]

Each of the final reaction products 2, 20 and 54 obtained above in Production Examples, furfuryl alcohol, water, and a silane coupling agent were blended so that the content of furfuryl alcohol was about 25 mass% and the content of water was about 24 mass%. In this way, binder compositions for making foundry molds of Example 6-1, Example 6-2 and Comparative Example 6-1 were obtained.

**[Table 2]**

| | Final reaction product | Intermediate Production Example | Composition of Final reaction product | | | | | | | Viscosity of final reaction product mPa·s (25°C) |
|---|---|---|---|---|---|---|---|---|---|---|
| | | | FFA (wt%) | BHMF (wt%) | Furan resin (wt%) | Water (wt%) | Total (wt%) | Amount of non-neutralized phosphoric acid (g/100 g) | Amount of mono-neutralized salt of phosphoric acid (g/100 g) | |
| Example 2-1 | Final reaction product 1 | Intermediate Production Example 1 | 19.0 | 15.1 | 56.8 | 9.1 | 100.0 | 0.0215 | 0.808 | 756 |
| Example 2-2 | Final reaction product 2 | Intermediate Production Example 2 | 19.9 | 18.8 | 52.1 | 9.2 | 100.0 | 0.0425 | 0.808 | 532 |
| Example 2-3 | Final reaction product 3 | Intermediate Production Example 3 | 19.6 | 18.0 | 52.8 | 9.6 | 100.0 | 0.0850 | 0.765 | 555 |
| Example 2-4 | Final reaction product 4 | Intermediate Production Example 4 | 19.6 | 17.1 | 54.0 | 9.3 | 100.0 | 0.425 | 0.425 | 608 |
| Example 2-5 | Final reaction product 5 | Intermediate Production Example 5 | 19.4 | 14.9 | 56.2 | 9.5 | 100.0 | 0.595 | 0.255 | 679 |
| Example 2-6 | Final reaction product 6 | Intermediate Production Example 6 | 19.5 | 18.5 | 52.8 | 9.2 | 100.0 | 0.0695 | 1.32 | 538 |
| Example 2-7 | Final reaction product 7 | Intermediate Production Example 7 | 20.1 | 17.2 | 53.7 | 9.0 | 100.0 | 0.425 | 0.808 | 633 |
| Example 2-8 | Final reaction product 8 | Intermediate Production Example 8 | 20.9 | 13.6 | 56.1 | 9.4 | 100.0 | 0.0430 | 0.425 | 907 |
| Example 2-9 | Final reaction product 9 | Intermediate Production Example 9 | 20.5 | 10.5 | 59.8 | 9.2 | 100.0 | 0.0430 | 0.278 | 986 |
| Example 2-10 | Final reaction product 10 | Intermediate Production Example 10 | 19.5 | 16.4 | 55.2 | 8.9 | 100.0 | 0.0430 | 7.00 | 684 |
| Example 2-11 | Final reaction product 11 | Intermediate Production Example 11 | 20.2 | 14.3 | 56.7 | 8.8 | 100.0 | 0.0430 | 13.9 | 991 |
| Example 2-12 | Final reaction product 12 | Intermediate Production Example 12 | 20.3 | 22.8 | 48.9 | 8.0 | 100.0 | 0.0425 | 0.808 | 440 |
| Example 2-13 | Final reaction product 13 | Intermediate Production Example 13 | 20.1 | 22.8 | 49.0 | 8.1 | 100.0 | 0.0425 | 0.808 | 492 |
| Example 2-14 | Final reaction product 14 | Intermediate Production Example 14 | 20.4 | 23.0 | 48.7 | 7.9 | 100.0 | 0.0425 | 0.808 | 453 |
| Example 2-15 | Final reaction product 15 | Intermediate Production Example 15 | 20.5 | 22.9 | 48.7 | 7.9 | 100.0 | 0.0425 | 0.808 | 460 |
| Example 2-16 | Final reaction product 16 | Intermediate Production Example 16 | 20.3 | 23.7 | 48.3 | 7.7 | 100.0 | 0.0695 | 1.32 | 445 |
| Example 2-17 | Final reaction product 17 | Intermediate Production Example 17 | 20.4 | 23.7 | 47.9 | 8.0 | 100.0 | 0.139 | 2.64 | 478 |
| Example 2-18 | Final reaction product 18 | Intermediate Production Example 18 | 19.4 | 13.9 | 57.2 | 9.5 | 100.0 | 0.0540 | 0.482 | 509 |
| Example 2-19 | Final reaction product 19 | Intermediate Production Example 2 | 20.9 | 19.2 | 50.8 | 9.1 | 100.0 | 0.0429 | 0.816 | 522 |
| Example 2-20 | Final reaction product 20 | Intermediate Production Example 2 | 32.9 | 26.2 | 36.9 | 4.0 | 100.0 | 0.0455 | 0.865 | 89 |
| Comparative Example 2-1 | Final reaction product 51 | Intermediate Production Example 51 | 17.0 | 1.3 | 71.7 | 10.0 | 100.0 | 0.850 | 0.000 | 1511 |
| Comparative Example 2-2 | Final reaction product 52 | Intermediate Production Example 52 | 24.5 | 3.8 | 66.5 | 5.2 | 100.0 | 0.0430 | 0.000 | 1309 |
| Comparative Example 2-3 | Final reaction product 53 | Intermediate Production Example 53 | 23.1 | 7.0 | 63.9 | 6.0 | 100.0 | 1.06 | 0.000 | 1202 |
| Comparative Example 2-4 | Final reaction product 54 | Intermediate Production Example 54 | 17.8 | 3.3 | 69.7 | 9.2 | 100.0 | 0.765 | 0.0850 | 822 |
| Comparative Example 2-5 | Final reaction product 55 | Intermediate Production Example 55 | 17.3 | 1.1 | 71.9 | 9.7 | 100.0 | 0.850 | 0.8080 | 1550 |
| Comparative Example 2-6 | Final reaction product 56 | Intermediate Production Example 56 | 24.3 | 3.4 | 66.2 | 6.1 | 100.0 | 0.0430 | 0.1390 | 1367 |

### [Production examples of composition for foundry molds]

Under the condition of 25°C and 55% RH, a curing agent composition was added to 100 parts by mass of furan reclaimed silica sand, then 0.8 parts by mass of the binder composition for making foundry molds shown in Tables 4 to 6 was added, and these were mixed to obtain a composition for foundry molds. As the curing agent composition, a xylene sulfonic acid/sulfuric acid curing agent (KAO LIGHTNER US-3, KAO LIGHTNER C-21: manufactured by Kao-Quaker Company, Limited) was used. The amount of the curing agent composition added was set to 0.32 parts by mass with respect to 100 parts by mass of the furan reclaimed silica sand, and the ratio of KAO LIGHTNER US-3 and KAO LIGHTNER C-21 was adjusted so that the compressive strength after 30 minutes of a test piece described below was 0.20 to 0.35 MPa.

### [Evaluation of mold compressive strength]

A cylindrical test piece frame having a diameter of 50 mm and a height of 50 mm was filled with the composition for foundry molds immediately after kneading. After a lapse of 30 minutes, the mold was stripped, and the compressive strength (MPa) was measured with the method described in JIS Z 2604-1976, and this strength was regarded as the compressive strength after 30 minutes. The compressive strength after 30 minutes was used as an index of the hardening speed to confirm the appropriateness of the amount of the curing agent. Separately, a test piece frame was similarly filled with the composition for foundry molds, the mold was stripped after a lapse of 2 hours, and 24 hours after the filling, the compressive strength (MPa) was measured with the method described in JIS Z 2604-1976 and regarded as the "compressive strength after 24 hours". A higher numerical value indicates a higher mold strength. Tables 3 to 6 show the evaluation results.

**[Table 3]**

| | Final reaction product used for preparation | Binder composition | | | | | | | | | Evaluation |
|---|---|---|---|---|---|---|---|---|---|---|---|
| | | FFA (wt%) | BHMF (wt%) | Furan resin (wt%) | Water (wt%) | Silane (wt%) | Total (wt%) | Amount of non-neutralized acid (g/100 g) | Amount of mono-neutralized salt of acid (g/100 g) | Viscosity mPa·s (25°C) | Mold strength MPa |
| Example 3-1 | Final reaction product 1 | 18.9 | 12.8 | 43.8 | 24.0 | 0.5 | 100.0 | 0.0168 | 0.630 | 82 | 3.86 |
| Example 3-2 | Final reaction product 2 | 19.0 | 14.8 | 41.6 | 24.1 | 0.5 | 100.0 | 0.0332 | 0.630 | 59 | 4.28 |
| Example 3-3 | Final reaction product 3 | 19.0 | 14.2 | 42.3 | 24.0 | 0.5 | 100.0 | 0.0663 | 0.597 | 61 | 4.25 |
| Example 3-4 | Final reaction product 4 | 18.9 | 13.4 | 43.2 | 24.0 | 0.5 | 100.0 | 0.332 | 0.332 | 65 | 4.10 |
| Example 3-5 | Final reaction product 5 | 19.0 | 11.7 | 44.9 | 23.9 | 0.5 | 100.0 | 0.464 | 0.199 | 72 | 3.92 |
| Example 3-6 | Final reaction product 6 | 19.2 | 14.5 | 41.8 | 24.0 | 0.5 | 100.0 | 0.0542 | 1.03 | 60 | 4.20 |
| Example 3-7 | Final reaction product 7 | 18.9 | 13.3 | 43.1 | 24.2 | 0.5 | 100.0 | 0.332 | 0.630 | 66 | 3.99 |
| Example 3-8 | Final reaction product 8 | 19.0 | 10.7 | 45.6 | 24.2 | 0.5 | 100.0 | 0.033 | 0.332 | 97 | 3.83 |
| Example 3-9 | Final reaction product 9 | 19.3 | 8.3 | 47.9 | 24.0 | 0.5 | 100.0 | 0.0330 | 0.217 | 108 | 3.69 |
| Example 3-10 | Final reaction product 10 | 19.2 | 13.3 | 42.8 | 24.2 | 0.5 | 100.0 | 0.0330 | 5.46 | 72 | 3.91 |
| Example 3-11 | Final reaction product 11 | 19.0 | 10.9 | 45.3 | 24.3 | 0.5 | 100.0 | 0.0330 | 10.8 | 109 | 3.71 |
| Example 3-12 | Final reaction product 12 | 19.0 | 17.8 | 38.8 | 23.9 | 0.5 | 100.0 | 0.0332 | 0.630 | 49 | 4.40 |
| Example 3-13 | Final reaction product 13 | 18.9 | 17.7 | 38.8 | 24.1 | 0.5 | 100.0 | 0.0332 | 0.630 | 53 | 4.35 |
| Example 3-14 | Final reaction product 14 | 19.1 | 18.1 | 38.2 | 24.1 | 0.5 | 100.0 | 0.0332 | 0.630 | 50 | 4.41 |
| Example 3-15 | Final reaction product 15 | 19.0 | 17.8 | 38.6 | 24.1 | 0.5 | 100.0 | 0.0332 | 0.630 | 50 | 4.30 |
| Example 3-16 | Final reaction product 16 | 18.9 | 18.4 | 38.2 | 24.0 | 0.5 | 100.0 | 0.0542 | 1.03 | 49 | 4.36 |
| Example 3-17 | Final reaction product 17 | 19.0 | 18.1 | 38.2 | 24.2 | 0.5 | 100.0 | 0.108 | 2.06 | 51 | 4.32 |
| Example 3-18 | Final reaction product 18 | 19.2 | 10.9 | 45.2 | 24.2 | 0.5 | 100.0 | 0.0421 | 0.376 | 55 | 3.88 |
| Example 3-19 | Final reaction product 19 | 19.2 | 14.5 | 41.9 | 23.9 | 0.5 | 100.0 | 0.0350 | 0.658 | 58 | 4.22 |
| Comparative Example 3-1 | Final reaction product 51 | 19.1 | 1.1 | 55.4 | 23.9 | 0.5 | 100.0 | 0.663 | 0.000 | 189 | 3.55 |
| Comparative Example 3-2 | Final reaction product 52 | 19.0 | 3.3 | 53.0 | 24.2 | 0.5 | 100.0 | 0.0335 | 0.000 | 155 | 3.24 |
| Comparative Example 3-3 | Final reaction product 53 | 19.0 | 5.6 | 51.0 | 23.9 | 0.5 | 100.0 | 0.827 | 0.000 | 131 | 3.39 |
| Comparative Example 3-4 | Final reaction product 54 | 19.2 | 2.5 | 53.8 | 24.0 | 0.5 | 100.0 | 0.597 | 0.066 | 87 | 3.27 |
| Comparative Example 3-5 | Final reaction product 55 | 19.3 | 0.8 | 55.5 | 23.9 | 0.5 | 100.0 | 0.663 | 0.630 | 196 | 3.44 |
| Comparative Example 3-6 | Final reaction product 56 | 18.9 | 3.0 | 53.5 | 24.1 | 0.5 | 100.0 | 0.0330 | 0.108 | 160 | 3.22 |

**[Table 4]**

| | Final reaction product used for preparation | Binder composition | | | | | | | | | Evaluation |
|---|---|---|---|---|---|---|---|---|---|---|---|
| | | FFA (wt%) | BHMF (wt%) | Furan resin (wt%) | Water (wt%) | Silane (wt%) | Total (wt%) | Amount of non-neutralized phosphoric acid (g/100 g) | Amount of mono-neutralized salt of phosphoric acid (g/100 g) | Viscosity mPa·s (25°C) | Mold strength MPa |
| Example 4-1 | Final reaction product 2 | 19.0 | 17.3 | 48.1 | 15.1 | 0.5 | 100.0 | 0.0393 | 0.746 | 66 | 4.44 |
| Comparative Example 4-1 | Final reaction product 54 | 19.2 | 3.0 | 62.5 | 14.8 | 0.5 | 100.0 | 0.686 | 0.0762 | 99 | 3.41 |

**[Table 5]**

| | Final reaction product used for preparation | Binder composition | | | | | | | | | Evaluation |
|---|---|---|---|---|---|---|---|---|---|---|---|
| | | FFA (wt%) | BHMF (wt%) | Furan resin (wt%) | Water (wt%) | Silane (wt%) | Total (wt%) | Amount of non-neutralized phosphoric acid (g/100 g) | Amount of mono-neutralized salt of phosphoric acid (g/100 g) | Viscosity mPa·s (25°C) | Mold strength MPa |
| Example 5-1 | Final reaction product 2 | 25.2 | 15.5 | 43.7 | 15.1 | 0.5 | 100.0 | 0.0360 | 0.677 | 61 | 4.59 |
| Comparative Example 5-1 | Final reaction product 54 | 25.1 | 2.7 | 56.9 | 14.8 | 0.5 | 100.0 | 0.623 | 0.0690 | 90 | 3.56 |

**[Table 6]**

| | Final reaction product used for preparation | Binder composition | | | | | | | | | Evaluation |
|---|---|---|---|---|---|---|---|---|---|---|---|
| | | FFA (wt%) | BHMF (wt%) | Furan resin (wt%) | Water (wt%) | Silane (wt%) | Total (wt%) | Amount of non-neutralized phosphoric acid (g/100 g) | Amount of mono-neutralized salt of phosphoric acid (g/100 g) | Viscosity mPa·s (25°C) | Mold strength MPa |
| Example 6-1 | Final reaction product 2 | 25.2 | 13.0 | 37.2 | 24.1 | 0.5 | 100.0 | 0.0290 | 0.577 | 68 | 4.48 |
| Example 6-2 | Final reaction product 20 | 26.8 | 19.8 | 28.8 | 24.1 | 0.5 | 100.0 | 0.0350 | 0.657 | 22 | 4.11 |
| Comparative Example 6-1 | Final reaction product 54 | 25.0 | 2.3 | 47.3 | 24.9 | 0.5 | 100.0 | 0.529 | 0.0590 | 73 | 3.45 |

## Claims

1. A method for producing a binder resin for making foundry molds which contains furfuryl alcohol, bishydroxymethylfuran, and a furan resin, the method comprising
a step A in which furfuryl alcohol and formaldehyde are reacted in a presence of at least one "catalyst a" selected from among phosphoric acid and boric acid and at least one "neutralized salt a" selected from among a mono-neutralized salt of phosphoric acid and a mono-neutralized salt of boric acid, wherein
in the step A, an amount of the "catalyst a" used is 0.0002 mol or more and 0.01 mol or less per mole of furfuryl alcohol, and an amount of the "neutralized salt a" used is 0.003 mol or more in terms of acid per mole of furfuryl alcohol.

2. The method according to claim 1, wherein in the step A, a pH of a reaction liquid before start of reaction is 2 or more and 5.5 or less.

3. The method according to claim 1 or 2, wherein in the step A, an amount of the "neutralized salt a" used is 0.15 mol or less in terms of acid per mole of furfuryl alcohol.

4. The method according to any one of claims 1 to 3, wherein the "neutralized salt a" is at least one selected from among an alkali metal salt and an amine salt.

5. The method according to any one of claims 1 to 4, wherein a furfuryl alcohol content in the binder resin for making foundry molds is 30 mass% or less.

6. The method according to any one of claims 1 to 5, wherein a bishydroxymethylfuran content in the binder resin for making foundry molds is 8 mass% or more.

7. The method according to any one of claims 1 to 6, wherein a furfuryl alcohol content in the binder resin for making foundry molds is 10 mass% or more.

8. The method according to any one of claims 1 to 7, wherein a bishydroxymethylfuran content in the binder resin for making foundry molds is 40 mass% or less.

9. The method according to any one of claims 1 to 8, wherein a furan resin content in the binder resin for making foundry molds is 30 mass% or more and 60 mass% or less.

10. The method according to any one of claims 1 to 9, wherein the furan resin is at least one selected from the group consisting of a urea-modified furan resin and a condensation product of furfuryl alcohol and an aldehyde and at least one selected from the group consisting of co-condensation products of two or more selected from the above group.

11. The method according to any one of claims 1 to 10, wherein a degree of neutralization of the "catalyst a" ["neutralized salt a"/("catalyst a" + "neutralized salt a")] is 25% or more and less than 100%.

12. A binder composition for making foundry molds, the binder composition comprising furfuryl alcohol (component A), bishydroxymethylfuran (component B), a furan resin (component C), and water (component D) and satisfying the following conditions (1) to (4):
Condition (1): a content of the component A in the binder composition for making foundry molds is 30 mass% or less;
Condition (2): a content of the component B in the binder composition for making foundry molds is 7 mass% or more;
Condition (3): a content of the component D in the binder composition for making foundry molds is 25 mass% or less; and
Condition (4): a content of at least one "catalyst a" selected from among phosphoric acid and boric acid is 0.01 g or more and 0.50 g or less and a content of at least one "neutralized salt a" selected from among a mono-neutralized salt of phosphoric acid and a mono-neutralized salt of boric acid in terms of acid is 0.13 g or more per 100 g of the binder composition for making foundry molds.

13. The binder composition for making foundry molds according to claim 12, wherein the furan resin contains at least one selected from the group consisting of a urea-modified furan resin and a condensation product of furfuryl alcohol and an aldehyde and at least one selected from the group consisting of co-condensation products of two or more selected from the above group.

14. The binder composition for making foundry molds according to claim 12 or 13, whose content of the component A is more than 0 mass%.

15. The binder composition for making foundry molds according to any one of claims 12 to 14, whose content of the component B is 30 mass% or less.

16. The binder composition for making foundry molds according to any one of claims 12 to 15, wherein the content of the "neutralized salt a" is 15 g or less per 100 g of the binder composition for making foundry molds.

17. The binder composition for making foundry molds according to any one of claims 12 to 16, whose ratio of a content of the component C to the content of the component B (a content of the component C/the content of the component B) is 1 or more and 7 or less.

18. The binder composition for making foundry molds according to any one of claims 12 to 17, whose content of the component C is 25 mass% or more and 50 mass% or less.

19. The binder composition for making foundry molds according to any one of claims 12 to 18, wherein a ratio of the content of the "neutralized salt a" in terms of acid to a total of the content of the "catalyst a" and the content of the "neutralized salt a" in terms of acid [the content of the "neutralized salt a" in terms of acid/the content of the "catalyst a" + the content of the "neutralized salt a" in terms of acid] is 0.25 or more and less than 1.

20. A composition for making foundry molds, the composition comprising: the binder composition for making foundry molds according to any one of claims 12 to 19; and a curing agent composition containing a curing agent for hardening the binder composition for making foundry molds.

21. A composition for foundry molds, the composition comprising: refractory particles; the binder composition for making foundry molds according to any one of claims 12 to 19; and a curing agent composition containing a curing agent for hardening the binder composition for making foundry molds.

22. A method for producing a foundry mold, the method comprising: a mixing step in which refractory particles, the binder composition for making foundry molds according to any one of claims 12 to 19, and a curing agent composition containing a curing agent for hardening the binder composition for making foundry molds are mixed to obtain a composition for foundry molds; and a hardening step in which the composition for foundry molds is filled into a pattern and hardened.
